# EUROPEAN PATENT SPECIFICATION

(11) **EP 3 081 771 B1**
(45) Date of publication and mention of the grant of the patent: **13.03.2019**
(21) Application number: 15305567.8
(22) Date of filing: 15.04.2015
(51) Int. Cl.: F01L 1/14, F02M 59/10

(54) **CAM FOLLOWER, INJECTION PUMP AND VALVE ACTUATOR COMPRISING SUCH A CAM FOLLOWER, AND MANUFACTURING METHOD**
NOCKENFOLGER, EINSPRITZPUMPE UND VENTILAKTUATOR MIT SOLCH EINEM NOCKENFOLGER UND HERSTELLUNGSVERFAHREN
GALET DE CAME, POMPE À INJECTION ET ACTIONNEUR DE SOUPAPE COMPRENANT UN TEL SUIVEUR DE CAME ET PROCÉDÉ DE FABRICATION

(43) Date of publication of application: 19.10.2016
(73) Proprietor: Aktiebolaget SKF, 415 50 Göteborg (SE)
(72) Inventor: Viault, Samuel, 37360 Saint-Antoine-du-Rocher (FR); Champalou, François, 41150 Chaumont-sur-Loire (FR); Hauvespre, Benoit, 37230 Saint Etienne de Chigny (FR); Berruet, Nicolas, 37260 Artannes sur Indre (FR); Jouanno, Guillaume, 37540 Saint-Cyr-sur-Loire (FR)
(74) Representative: Kloker, Markus

(56) References cited:
- EP-A1- 2 853 696
- DE-A1-102004 036 108
- JP-A- H06 146 819
- US-B1- 6 257 185

## Description

### TECHNICAL FIELD OF THE INVENTION

The invention concerns a cam follower. The invention also concerns an injection pump and a valve actuator for a motor vehicle, each comprising such a cam follower. The invention also concerns a method for manufacturing such a cam follower.

### BACKGROUND OF THE INVENTION

JP-A-2001/329809 discloses a cam follower, comprising a tappet, a pin and a roller. The tappet extends along a longitudinal axis, while the pin and the roller are centered on a transverse axis. The tappet is movable back and forth along the longitudinal axis in a housing, while the roller is movable in rotation around its central axis on a cam. A projecting portion is formed at the outer surface of the tappet and disposed in a groove formed in the housing. Thus, the tappet is prevented from rotating around its longitudinal axis in the housing. In other words, the projecting portion forms an antirotation member formed integral with the tappet.

JP-H06-146819A describes a method for overmoulding a mechanical piece such as a valve lifter made of resin onto a steel chip. An extremity portion of the valve lifter is configured to be in contact with a cam.

Document EP 2853696 A1 discloses a roller cam follower adapted to equip an injection pump.The cam follower comprises an anti-rotation device integrally formed with tappet.

### SUMMARY OF THE INVENTION

The aim of the invention is to provide an improved cam follower.

To this end, the invention concerns a cam follower, comprising: a tappet having a cylindrical outer surface centered on a longitudinal axis and adapted to slide in a housing surrounding the tappet, a pin extending between two opposite ends along a transverse axis perpendicular to the longitudinal axis, a roller element movable in rotation relative to the pin around the transverse axis and adapted to roll on a cam, and an antirotation member for preventing a rotation of the tappet around the longitudinal axis in the housing. According to the invention, the antirotation member is overmoulded onto the tappet, or the tappet is overmoulded onto the antirotation member. The cam follower further comprises a support element mounted in the tappet and supporting the pin. The support element is fitted in recesses formed in the tappet, and each pin end is mounted between a half-cylindrical section formed in the tappet and a half-cylindrical section formed in the support element.

Thanks to the invention, wear of the antirotation member can be reduced and lifetime of the cam follower can be improved. Since the tappet and the antirotation member are two different components, they can each be made of specific materials, chosen for specific conditions of operation. Besides, the mechanical connection obtained by overmolding is tighter than by clipping.

According to further aspects of the invention which are advantageous but not compulsory, such a cam follower may incorporate one or several of the following features:
- The antirotation member is made of a harder material than the tappet.
- The antirotation member is made of metal, for example made of steel.
- The antirotation member has a leg positioned in a hole formed in the tappet and a head protruding from the cylindrical outer surface of the tappet opposite the longitudinal axis.
- The antirotation member has an outer surface with a curved, triangular or rectangular shape in a sectional plane perpendicular to the longitudinal axis.
- Several antirotation members are overmoulded onto the tappet, or the tappet is overmoulded onto several antirotation members.
- The antirotation members are regularly distributed around the longitudinal axis.
- The support element is a metal insert, for example made of steel.
- The cam follower comprises a bearing interposed between the pin and the roller element.
- The tappet is made of synthetic material.

The invention also concerns an injection pump or a valve actuator for a motor vehicle, comprising a cam follower as defined here-above.

The invention also concerns a method for manufacturing a cam follower as described here-above. The method comprises a step of overmolding the antirotation member onto the tappet, or the tappet onto the antirotation member.

### BRIEF DESCRIPTION OF THE DRAWINGS

The invention will now be explained in correspondence with the annexed figures, and as an illustrative example, without restricting the object of the invention. In the annexed figures:
- figure 1 is a first sectional view of a cam follower according to the invention, in a first plane including the longitudinal axis of the cam follower, showing a tappet, an insert, a pin and a roller forming the cam follower;
- figure 2 is a second sectional view of the cam follower, in a second plane perpendicular to the first plane and including the longitudinal axis of the cam follower, showing only the tappet and the insert;
- figure 3 is an axial view of the cam follower along arrow III of figure 2, showing only the tappet and the insert; and
- figure 4 is a perspective view of the tappet and the insert.

### DETAILED DESCRIPTION OF SOME EMBODIMENTS

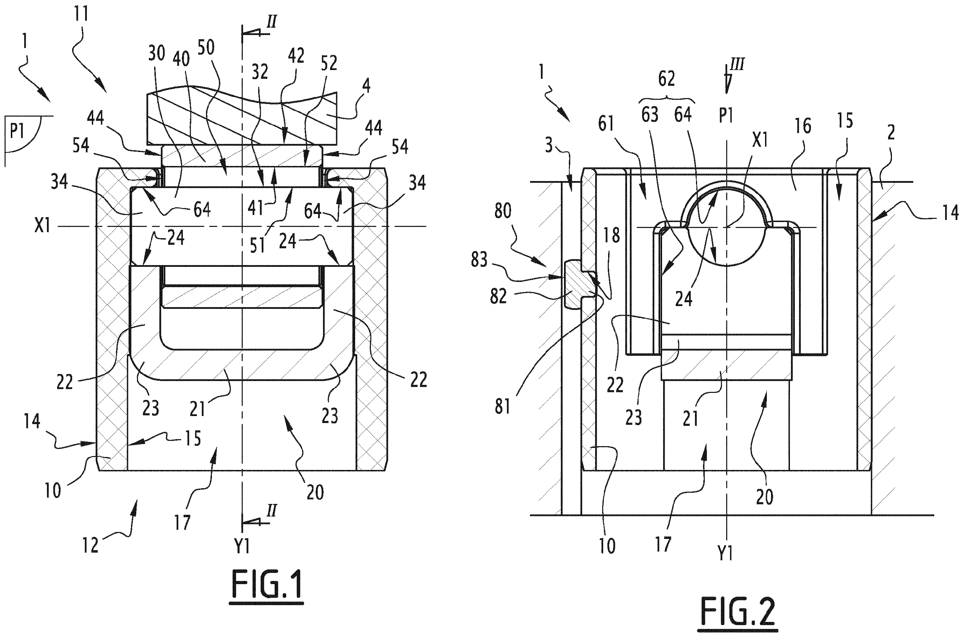

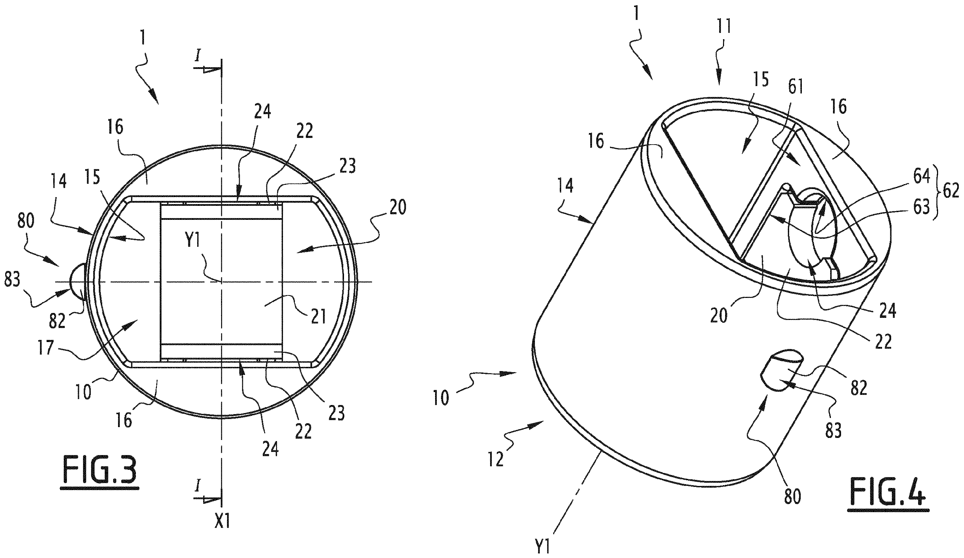

The cam follower 1 represented on figures 1 to 4 is adapted to equip a mechanical system, for example an injection pump or a valve actuator for a motor vehicle.

The cam follower 1 comprises a tappet 10, an insert 20, a pin 30, a roller 40 and a bush 50, together forming a plain bearing. Pin 30, roller 40 and bush 50 are centered on a transverse axis X1, while tappet 10 is centered on a longitudinal axis Y1. Axes X1 and Y1 are perpendicular. The tappet 10 is mounted in a housing 2, represented only on figure 2 for simplification purpose, belonging to the mechanical system. Housing 2 is provided with a groove 3 extending parallel to axis Y1. Housing 2 is preferably made of metal. Tappet 10 is movable back and forth along axis Y1 in housing 2. Roller 40 is adapted to roll on a cam 4, shown only partly on figure 1 for simplification purpose.

Tappet 10 has an overall tubular shape centered on axis Y1. Tappet 10 extends along axis Y1 between two ends 11 and 12. Tappet 10 has a cylindrical outer surface 14 and a cylindrical inner bore 15. Tappet 10 also has two inner protruding parts 16, formed on either side of axis X1. Bore 15 and parts 16 delimit a cavity 17 open at both ends 11 and 12. Cavity 17 receives a shaft not shown through end 12, for moving tappet 10 along axis Y1. Surface 14 is adapted to slide in housing 2 surrounding tappet 10. Tappet 10 is preferably made of synthetic material, by example polyamide 6,6 (PA) or polyether-etherketone (PEEK). Material of tappet 10 is chosen as a compromise between weight, cost and resistance (to oil flow and temperature variations).

Each inner protruding part 16 has a plane surface 61 extending perpendicular to axis X1. A recess 62 is formed in part 16 and open at surface 61. Recess 62 includes a parallelepiped section 63 and a half-cylindrical section 64 in communication with each other. Sections 63 and 64 are open toward end 12 of tappet 10. Sections 64 are centered on axis X1.

Insert 20 comprises a plane central portion 21 and two plane lateral portions 22. Insert 20 comprises curved portions 23 connecting portions 21 and 22. Portions 22 form two lateral flanges extending parallel to axis Y1 in a bifurcated manner, from portion 21 toward end 11, on both side of axis Y1. Insert 20 comprises a half-cylindrical section 24 formed in each portion 22. Portions 22 are fitted in respective recesses 62, with sections 24 centered on axis X1 and open toward sections 64. Insert 20 is preferably made of stamped metal sheet, for example made of steel. Insert 20 is assembled with tappet 10 by insertion from end 12 and force-fitting in recesses 62

Thanks to insert 20, the shape of tappet 10 can be simplified in comparison with a tappet supporting a pin 30, without support element. Moreover, tappet 10 and insert 20 can each be made of specific materials, chosen for specific conditions of operation. Thus, lifetime of cam follower 1 can be improved.

Pin 30 has a cylindrical outer surface 32 extending between two pin ends 34. Roller 40 has an inner cylindrical bore 41 and an outer cylindrical surface 42 extending between two lateral faces 44. Bush 50 has an inner cylindrical bore 51 and an outer cylindrical surface 52 extending between two lateral faces 54. Surface 32 of pin 30 is adjusted with bore 51 of bush 50, while surface 52 of bush 50 is adjusted with bore 41 of roller 40.

During assembly of cam follower 1, each end 34 of pin 30 is received in a bore centered on axis X1 and formed by sections 24 and 64. Pin, roller and bush axes merge with axis X1. Roller 40 is then adapted to roll on cam 4, more precisely surface 42 can roll on the outer surface of cam 4, while can follower 1 moves back and forth along axis Y1. When roller 40 rolls on cam 4, each section 26 bears a respective end 36 of pin 30, on which roller 40 is mounted. In other words, insert 20 forms a support element for pin 30 and roller 40.

Cam follower 1 is provided with an antirotation member 80 for preventing tappet 10 from rotating in housing 2 around axis Y1. Member 80 has a leg 81 and a head 82 formed integral with each other. Leg 81 is positioned in a hole 18 formed in tappet 10. Hole 18 is open at both surface 14 and bore 15. Head 82 protrudes from leg 81 and surface 14 opposite axis Y1. Head 82 has an outer surface 83 with a curved shape in a sectional plane perpendicular to axis Y1. Head 82 is positioned in groove 3 of housing 2, thus preventing rotation of tappet 10 around axis Y1. Tappet 10 is maintained in the right angular position around axis Y1 inside housing 2.

According to the invention, tappet 10 is overmolded onto the antirotation member 80, or the antirotation member 80 is overmoulded onto tappet 10. Tappet 10 and member 80 are two different components forming cam follower 1. Thus, tappet 10 and member 80 can each be made of specific materials, chosen for specific conditions of operation. Member 80 is preferably made of a harder material than tappet 10. Member 80 is still preferably made of metal, for example steel. Alternately, member 80 can be made of iron, bronze alloy, glass, wood or synthetic material harder than tappet 10. Tappet 10 is preferably made of synthetic material. Weight and cost of cam follower 1 are reduced in comparison with a tappet 10 made of metal. Besides, wear of member 80 is reduced and lifetime of cam follower 1 is improved in comparison with an antirotation member made of synthetic material.

Other non-shown embodiments can be implemented without leaving the scope of the invention.

According to a non-show embodiment, the antirotation member 80 may have a different shape and/or position. For example, its outer surface 83 may have a triangular or rectangular shape in a sectional plane perpendicular to axis Y1.

According to another non-show embodiment, tappet 10 may be overmolded onto several antirotation members 80. Preferably, the antirotation members 80 are regularly distributed around axis Y1.

According to another non-show embodiment, bush 50 may be replaced by a rolling bearing including a series of needles or rollers distributed around axis X1 between pin 30 and roller 40.

According to another non-shown embodiment, cam follower 1 may be devoid of bearing or bush 50, so that pin 30 and roller 40 form together a plain bearing. In this case, surface 32 of pin 30 is adjusted with bore 41 of roller 40.

Whatever the embodiment, at least on antirotation member 80 is overmoulded onto tappet 10, or tappet 10 is overmolded onto at least one antirotation member 80.

In addition, technical features of the different embodiments can be, in whole or part, combined with each other. Thus, the cam follower 1 and its manufacturing method can be adapted to the specific requirements of the application.

## Claims

1. A cam follower (1), comprising:
- a tappet (10) having a cylindrical outer surface (14) centered on a longitudinal axis (Y1) and adapted to slide in a housing (2) surrounding the tappet (10),
- a pin (30) extending between two opposite ends (34) along a transverse axis (X1) perpendicular to the longitudinal axis (Y1),
- a roller element (40) movable in rotation relative to the pin (30) around the transverse axis (X1) and adapted to roll on a cam (4), and
- an antirotation member (80) for preventing a rotation of the tappet (10) around the longitudinal axis (Y1) in the housing (2),
the antirotation member (80) being overmoulded onto the tappet (10), or the tappet (10) being overmoulded onto the antirotation member (80), the cam follower (1) further comprising a support element (20) mounted in the tappet (10) and supporting the pin (30),
wherein the support element (20) is fitted in recesses (63, 64) formed in the tappet (10),
and wherein each pin end (34) is mounted between a half-cylindrical section (64) formed in the tappet (10) and a half-cylindrical section (24) formed in the support element (20).

2. The cam follower (1) according to claim 1, wherein the antirotation member (80) is made of a harder material than the tappet (10).

3. The cam follower (1) according to any one of the previous claims, wherein the tappet (10) is overmoulded onto the antirotation member (80) and the antirotation member (80) is made of metal, for example made of steel.

4. The cam follower (1) according to any one of the previous claims, wherein the antirotation member (80) has a leg (81) positioned in a hole (18) formed in the tappet (10) and a head (82) protruding from the cylindrical outer surface (14) of the tappet (10) opposite the longitudinal axis (Y1).

5. The cam follower (1) according to any one of the previous claims, wherein the antirotation member (80) has an outer surface (83) with a curved, triangular or rectangular shape in a sectional plane perpendicular to the longitudinal axis (Y1).

6. The cam follower (1) according to any one of the previous claims, wherein several antirotation members (80) are overmoulded onto the tappet (10), or the tappet (10) is overmoulded onto several antirotation members (80).

7. The cam follower (1) according to claim 6, wherein the antirotation members (80) are regularly distributed around the longitudinal axis (Y1)

8. The cam follower (1) according to any one of the previous claims, wherein the support element (20) is a metal insert, for example made of steel.

9. The cam follower (1) according to any one of the previous claims, comprising a bearing (50) interposed between the pin (30) and the roller element (40).

10. The cam follower (1) according to any one of the previous claims, wherein the tappet (10) is made of synthetic material.

11. A valve actuator or an injection pump for a motor vehicle, wherein it comprises a cam follower (1) according to any one of claims 1 to 10.

12. Method for manufacturing a cam follower (1) according to any one of claims 1 to 10, the method comprising a step of overmoulding the antirotation member (80) onto the tappet (10), or the tappet (10) onto the antirotation member (80), the cam follower (1) further comprising a support element (20) mounted in the tappet (10) and supporting the pin (30), wherein the support element (20) is fitted in recesses (63, 64) formed in the tappet (10) and wherein each pin (34) is mounted between a half-cylindrical section (64) formed in the tappet (10) and a half-cylindrical section (24) formed in the support element (20).

## Patentansprüche

1. Nockenfolger (1), umfassend:
- einen Stößel (10), der eine zylindrische Außenfläche (14) aufweist, die auf einer Längsachse (Y1) zentriert und geeignet ist, in einem den Stößel (10) umgebenden Gehäuse (2) zu gleiten,
- einen Stift (30), der sich zwischen zwei sich gegenüberliegenden Enden (34) entlang einer Querachse (X1) rechtwinklig zu der Längsachse (Y1) erstreckt,
- ein Rollenelement (40), das in Drehung relativ zu dem Stift (30) um die Querachse (X1) bewegbar und geeignet ist, auf einem Nocken (4) zu rollen, und
- ein Drehsicherungselement (80), um eine Drehung des Stößels (10) um die Längsachse (Y1) in dem Gehäuse (2) zu verhindern,
wobei das Drehsicherungselement (80) auf den Stößel (10) aufgespritzt ist oder der Stößel (10) auf das Drehsicherungselement (80) aufgespritzt ist, wobei der Nockenfolger (1) ferner ein Tragelement (20) umfasst, das in dem Stößel (10) befestigt ist und den Stift (30) trägt,
wobei das Tragelement (20) in Ausnehmungen (63, 64) eingepasst ist, die in dem Stößel (10) ausgebildet sind,
und wobei jedes Stiftende (34) zwischen einem in dem Stößel (10) ausgebildeten halbzylindrischen Abschnitt (64) und einem in dem Tragelement (20) ausgebildeten halbzylindrischen Abschnitt (24) befestigt ist.

2. Nockenfolger (1) nach Anspruch 1, wobei das Drehsicherungselement (80) aus einem härteren Material als der Stößel (10) hergestellt ist.

3. Nockenfolger (1) nach einem der vorhergehenden Ansprüche, wobei der Stößel (10) auf das Drehsicherungselement (80) aufgespritzt ist und das Drehsicherungselement (80) aus Metall, zum Beispiel aus Stahl, hergestellt ist.

4. Nockenfolger (1) nach einem der vorhergehenden Ansprüche, wobei das Drehsicherungselement (80) ein Bein (81), das sich in einem in dem Stößel (10) ausgebildeten Loch (18) befindet, und einen Kopf (82), der von der zylindrischen Außenfläche (14) des Stößels (10) gegenüber der Längsachse (Y1) vorsteht, aufweist.

5. Nockenfolger (1) nach einem der vorhergehenden Ansprüche, wobei das Drehsicherungselement (80) eine Außenfläche (83) mit einer gekrümmten, dreieckigen oder rechteckigen Form in einer Schnittebene rechtwinklig zu der Längsachse (Y1) aufweist.

6. Nockenfolger (1) nach einem der vorhergehenden Ansprüche, wobei mehrere Drehsicherungselemente (80) auf den Stößel (10) aufgespritzt sind oder der Stößel (10) auf mehrere Drehsicherungselemente (80) aufgespritzt ist.

7. Nockenfolger (1) nach Anspruch 6, wobei die Drehsicherungselemente (80) regelmäßig um die Längsachse (Y1) verteilt sind.

8. Nockenfolger (1) nach einem der vorhergehenden Ansprüche, wobei das Tragelement (20) ein Metalleinsatz ist, der zum Beispiel aus Stahl hergestellt ist.

9. Nockenfolger (1) nach einem der vorhergehenden Ansprüche, umfassend ein Lager (50), das zwischen dem Stift (30) und dem Rollenelement (40) angeordnet ist.

10. Nockenfolger (1) nach einem der vorhergehenden Ansprüche, wobei der Stößel (10) aus einem synthetischen Material hergestellt ist.

11. Ventilstellantrieb oder Einspritzpumpe für ein Kraftfahrzeug, wobei dieser bzw. diese einen Nockenfolger (1) nach einem der Ansprüche 1 bis 10 umfasst.

12. Verfahren zur Herstellung eines Nockenfolgers (1) nach einem der Ansprüche 1 bis 10, wobei das Verfahren einen Schritt des Aufspritzens des Drehsicherungselements (80) auf den Stößel (10) oder des Stößels (10) auf das Drehsicherungselement (80) umfasst, wobei der Nockenfolger (1) ferner ein Tragelement (20) umfasst, das in dem Stößel (10) befestigt ist und den Stift (30) trägt, wobei das Tragelement (20) in Ausnehmungen (63, 64) eingepasst ist, die in dem Stößel (10) ausgebildet sind, und wobei jedes Stiftende (34) zwischen einem in dem Stößel (10) ausgebildeten halbzylindrischen Abschnitt (64) und einem in dem Tragelement (20) ausgebildeten halbzylindrischen Abschnitt (24) befestigt ist.

## Revendications

1. Galet de came (1), comprenant :
un poussoir (10) ayant une surface externe cylindrique (14) centrée sur un axe longitudinal (Y1) et conçu pour coulisser dans un boîtier (2) entourant le poussoir (10),
une broche (30) s'étendant entre deux extrémités opposées (34) le long d'un axe transversal (X1) perpendiculaire à l'axe longitudinal (Y1),
un élément rouleau (40) mobile en rotation par rapport à la broche (30) autour de l'axe transversal (X1) et conçu pour rouler sur une came (4), et
un élément antirotation (80) destiné à empêcher une rotation du poussoir (10) autour de l'axe longitudinal (Y1) dans le boîtier (2),
l'élément antirotation (80) étant surmoulé sur le poussoir (10), ou le poussoir (10) étant surmoulé sur l'élément antirotation (80), le galet de came (1) comprenant en outre un élément de support (20) monté dans le poussoir (10) et supportant la broche (30),
l'élément de support (20) étant placé dans des évidements (63, 64) formés dans le poussoir (10),
et chaque extrémité de broche (34) étant montée entre une section demi-cylindrique (64) formée dans le poussoir (10) et une section demi-cylindrique (24) formée dans l'élément de support (20).

2. Galet de came (1) selon la revendication 1, l'élément antirotation (80) étant en un matériau plus dur que le poussoir (10).

3. Galet de came (1) selon l'une quelconque des revendications précédentes, le poussoir (10) étant surmoulé sur l'élément antirotation (80) et l'élément antirotation (80) étant en métal, par exemple en acier.

4. Galet de came (1) selon l'une quelconque des revendications précédentes, l'élément antirotation (80) ayant une patte (81) positionnée dans un trou (18) formé dans le poussoir (10) et une tête (82) faisant saillie de la surface externe cylindrique (14) du poussoir (10) à l'opposé de l'axe longitudinal (Y1).

5. Galet de came (1) selon l'une quelconque des revendications précédentes, **caractérisé en ce que** l'élément antirotation (80) a une surface externe (83) de forme courbe, triangulaire ou rectangulaire dans un plan en coupe perpendiculaire à l'axe longitudinal (Y1).

6. Galet de came (1) selon l'une quelconque des revendications précédentes, plusieurs éléments antirotation (80) étant surmoulés sur le poussoir (10), ou le poussoir (10) étant surmoulé sur plusieurs éléments antirotation (80).

7. Galet de came (1) selon la revendication 6, les éléments antirotation (80) étant régulièrement répartis autour de l'axe longitudinal (Y1).

8. Galet de came (1) selon l'une quelconque des revendications précédentes, l'élément de support (20) étant un insert métallique, par exemple en acier.

9. Galet de came (1) selon l'une quelconque des revendications précédentes, comprenant un palier (50) interposé entre la broche (30) et l'élément rouleau (40).

10. Galet de came (1) selon l'une quelconque des revendications précédentes, **caractérisé en ce que** le poussoir (10) est en matière synthétique.

11. Actionneur de soupape ou pompe d'injection pour un véhicule automobile, comprenant un galet de came (1) selon l'une quelconque des revendications 1 à 10.

12. Procédé de fabrication d'un galet de came (1) selon l'une quelconque des revendications 1 à 10,
le procédé comprenant l'étape consistant à surmouler l'élément antirotation (80) sur le poussoir (10), ou le poussoir (10) sur l'élément antirotation (80), le galet de came (1) comprenant en outre un élément de support (20) monté dans le poussoir (10) et supportant la broche (30), l'élément de support (20) étant placé dans des évidements (63, 64) formés dans le poussoir (10) et chaque broche (34) étant montée entre une section demi-cylindrique (64) formée dans le poussoir (10) et une section demi-cylindrique (24) formée dans l'élément de support (20).
